# EUROPEAN PATENT APPLICATION

(11) **EP 4 717 340 A1**
(43) Date of publication of application: **01.04.2026**
(21) Application number: 25202658.8
(22) Date of filing: 17.09.2025
(51) Int. Cl.: B01D 46/58, B23K 37/006, B23K 9/095, B23K 9/16, B23K 9/32

(54) **VACUUM FUNCTION FUME EXTRACTOR ADDITION**

(30) Priority: 26.09.2024 US 202463699526 P; 10.09.2025 US 202519324476
(71) Applicant: Illinois Tool Works Inc., Glenview IL 60025 (US)
(72) Inventor: BECKER, William Joshua, Glenview, 60025 (US); MARHEFKE, Jessica Marie, Glenview, 60025 (US); BEATHAM, Benjamin, Glenview, 60025 (US)
(74) Representative: HGF

(57) **Abstract**

An example welding extraction machine comprising: one or more inlets to receive an air flow and direct the air flow to a main path; a first valve configured to direct the air flow through the main path or through a first diversion, wherein the main path includes a first filter type and a second filter type, wherein the first diversion bypasses the first filter type; a second valve configured to direct the air flow through the main path or through a second diversion, wherein the second diversion bypasses the main path including the second filter type; and an exhaust for outputting the air flow.

## Description

### CROSS REFERENCE TO RELATED APPLICATIONS

This application is a Non-Provisional Patent Application claiming priority to U.S. Provisional Patent Application No. 63/699,526 entitled "Vacuum Function Fume Extractor Addition" filed September 26, 2024, which is herein incorporated by reference in its entirety.

### FIELD OF THE DISCLOSURE

The present disclosure relates generally to systems for extracting fumes or particles from air streams, such as in welding, cutting, metal working, wood working, and other applications.

### BACKGROUND

A wide range of industrial, commercial, hobby and other applications result in particles that can be removed with proper extraction and filtering. Metal working operations, for example, including cutting, welding, soldering, assembly, and other processes may generate smoke, particulate, and fumes. In settings where cutting, sanding and other operations are performed, dust, fumes, particulate and other types of particles may be generated that are collected and extracted from work areas and controlled spaces.

### SUMMARY

Fume extraction systems are disclosed and, more particularly, fume extraction systems with a vacuum addition are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an exemplary exhaust fume system, in accordance with aspects of this disclosure.
FIG. 2 illustrates a block diagram of an exemplary exhaust fume system that may be used to implement the example welding-type system of FIG. 1, in accordance with aspects of this disclosure.
FIG. 3 illustrates an exemplary exhaust fume system including a first exemplary filter system that may be used to implement the example welding-type system of FIG. 1, in accordance with aspects of this disclosure.
FIG. 4 illustrates an exemplary exhaust fume system including a second exemplary filter system that may be used to implement the example welding-type system of FIG. 1, in accordance with aspects of this disclosure.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

This disclosure relates generally to fume extraction systems and, more particularly, to fume extraction systems with vacuum functions. Example welding-type systems are disclosed that toggle between different types of filters for collecting different types of particles. Disclosed example fume extraction systems provide different suction paths for different particle types. Disclosed example fume extraction systems determine whether the fume extraction system is being used to determine a particle type being collected and provide an appropriate path and/or filter type.

Fume extraction systems may be used to collect particles produced during metal working applications. To maintain a clean environment and/or workspace, operators also typically vacuum dust and particles. Using separate machines for fume extraction and vacuuming may be a hassle and so operators may sometimes use an extraction machine to also vacuum particles from surfaces in and around the metalworking environment. However, using the same machine to collect all types of particles leads to clogging of filters, decreased life of filters, and decreased life of fume extraction systems.

The present disclosure provides a fume extraction system with vacuum function designed to collect different types of particles in a metal working environment. The present disclosure advantageously prolongs the life of filters by toggling between different types of particles and/or by redirecting particles to an appropriate filter. Disclosed example fume extraction systems provide an integrated vacuum function that allows an operator to use a fume extraction system to collect particles and route the particles to the appropriate filter types.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example embodiments include a welding extraction machine comprising one or more inlets to receive an air flow and direct the air flow to a main path, a first valve configured to direct the air flow through the main path or through a first diversion, wherein the main path includes a first filter type and a second filter type, wherein the first diversion bypasses the first filter type, a second valve configured to direct the air flow through the main path or through a second diversion, wherein the second diversion bypasses the main path including the second filter type, and an exhaust for outputting the air flow. Some disclosed example embodiments include control circuitry configured to control the first valve and the second valve. Some disclosed example embodiments include one or more sensors to provide one or more signals to the control circuitry, the control circuitry configured to control the first valve to direct the air flow to the main path or the first diversion based on the one or more signals.

In some example embodiments, the one or more sensors to provide a signal to the control circuitry, the control circuitry configured to control the second valve to direct the air flow to the main path or the second diversion based on the one or more signals. In some example embodiments, the first filter type is a filter with a minimum efficiency reporting value (MERV) that is 12 or greater. In some example embodiments, the second filter type is a filter with a MERV that is less than 12.

Disclosed example embodiments include a welding fume extraction machine including one or more inlets to receive air flow, a valve for directing the air flow received through the one or more inlets to a first path or a second path, wherein the valve is configured to direct the air flow to at least the first path or the second path, wherein the first path includes a first filter type and the second path includes a second filter type, and an exhaust for outputting the air flow from the first path or the second path. Some example embodiments include control circuitry configured to control the valve.

Some example embodiments include one or more sensors to provide a signal to the control circuitry, the control circuitry configured to direct the valve to route the air flow to the first path or the second path based on the signal. In some example embodiments, the one or more sensors are one or more of an accelerometer, a motion sensor, an inertial measurement unit, a light sensor, a particulate sensor, a proximity sensor, a laser sensor, etc. Some example embodiments include a connection point for a welding accessory, wherein the control circuitry controls the valve to direct the air flow based on whether the welding accessory is connected at the connection point. In some example embodiments, the control circuitry is configured to control the valve to direct the air flow to the second filter type when the welding accessory is disconnected at the connection point. In some example embodiments, the control circuitry is configured to control the valve to direct the air flow to the first filter type when the welding accessory is connected at the connection point.

Some example embodiments include a welding accessory. In some example embodiments, the one or more sensors are located on the welding accessory. In some example embodiments, the control circuitry is configured to control the valve to direct the air flow to the first filter type when the welding accessory is in use by an operator. In some example embodiments the welding accessory is a fume extraction nozzle or a fume gun. In some example embodiments, the first filter type is a filter with a minimum efficiency reporting value (MERV) that is 12 or greater. In some example embodiments, the second filter type is a filter with a MERV that is less than 12. Some example embodiments include a user interface configured to provide weld fume settings for the valve. Some example embodiments include a particulate bin to receive particles extracted from the air flow.

As used herein, the terms "first," "second," "third," etc. may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein "particles" discussed in the present disclosure may include any substance that is borne by, suspended in or otherwise carried by the air, or more generally the fluid present in the area considered. Depending upon the application, the particles may be in an aerosol form, such as solid, liquid or gaseous phase particles that are suspended in air. Such particles may form smoke, fumes (including chemical fumes), or clouds present or given off by an operation ongoing in the area, whether or not visible to the human operators. In other applications, the particles may be at least temporarily airborne but not suspended in the air, such as in the case of larger particulate, such as droplets, mist (e.g., from oils, coolants, and so forth), dust (e.g., from drywall, grain, minerals, cements, or other dust sources), chips, debris, and so forth. The present techniques are directed to collecting and extracting any such particles in the manners described. Similarly, reference is made in this disclosure to "air," "airborne," or "air flow" although the fluid in which the particles are found and that is circulated by the system may be, more generally, a gaseous substance that need not contain the same constituents, or in the same ratios as found in atmospheric air. Such gases are intended nevertheless be included in the terms "air," "airborne," or "air flow," which may include particles such as the particles described above.

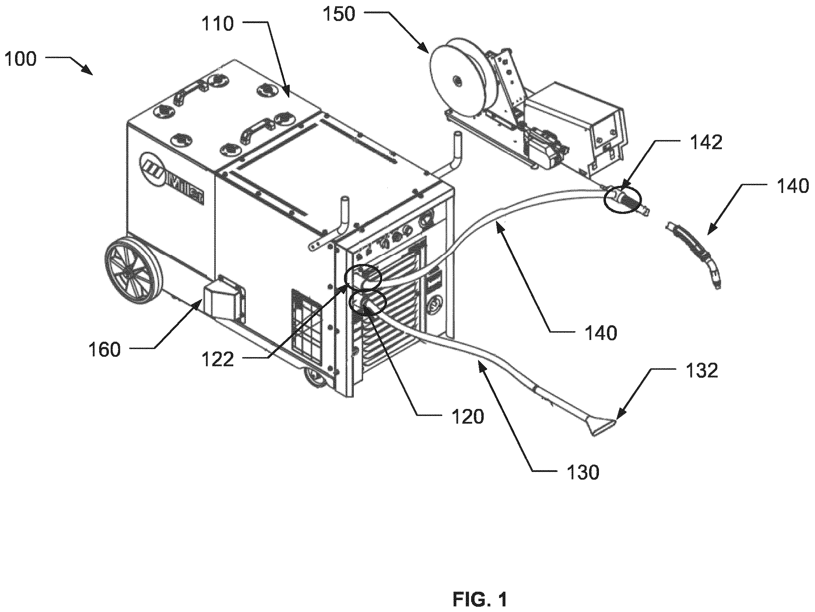

Turning now to the figures, FIG. 1 illustrates a perspective view of an example extraction system 100. The example extraction system 100 includes an enclosure 110 to house components of the extraction system 100, one or more connection ports, such as the first connection port 120 and the second connection port 122, and one or more collection hoses, such as collection hose 130 and collection hose 140. In some examples, the example extraction system 100 includes one connection port. In some other examples, the example extraction system 100 includes two or more connection ports to facilitate extracting fumes from multiple work areas. In some examples, accessories such as a welding gun 140 or fume nozzle 132 may be coupled to collection hose 130 and/or collection hose 140 through a connection point 142 in order to use the example extraction system 100 to draw fumes or vacuum particles from multiple work areas. In some examples, a wire feeder 150 may provide welding wire to the welding gun 140 via the connection point 142. The extraction system 100 draws the air flow via the collection hose 130 or collection hose 140. The extraction system 100 may expel the air flow drawn into the housing 110 via an exhaust 160.

The exemplary fume extraction system 100 may be used during welding and other metal working operations as described above. It should be understood however, that welding is merely an example and that a wide range of industrial, commercial, hobby and other applications may result in fumes, smoke, or other particles that can be removed by the extraction system 100. Metal working operations, for example, cutting, welding, soldering, assembly, and other processes may generate smoke, particulate, and fumes. In machine shops, woodworking shops, worksites where cutting, sanding and other operations are performed, dust, fumes, particulate and other types of particles may be generated that it may be desirable to collect and extract from work areas and controlled spaces.

In some applications, the extraction system 100 is placed in a work area (e.g., work cell) and/or in the vicinity of a work surface. The extraction system 100 may be a mobile system that may be moved to different work areas, may be stationary, and/or may be integrated into an existing ventilation system or work area. As a user performs a work operation (e.g., a welding operation, sanding, cutting, etc.), the extraction system 100 may draw fumes and/or smoke from the work area. In order to determine whether a welding operation is being performed, one or more sensors may be placed in the work area, in the environment surrounding the work area, on/in the extraction system 100, near the extraction system 100 or work area, on accessories of the extraction system 100 (e.g., first collection hose 130, second collection hose 140, fume nozzle 132, fume gun 140, welding helmets, welding gloves, etc.), at one or more connection points, such as connection point 142, at one or more connection ports (e.g. first connection port 120, second connection port 122, etc.), as non-limiting examples.

The one or more sensors may be configured to sense one or more parameters indicative of the working environment or other parameters related to the work operation (e.g., fumes, temperature, humidity, light, motion, etc.). In some examples, the one or more sensors may determine whether the fume extraction system 100 is being used for welding based on whether a welding accessory is being utilized (e.g. collection hose being used without fume nozzle 132 or fume gun 142), or whether a non-welding accessory is being utilized (e.g., vacuum nozzle or other non-welding attachment). In some other examples, one or more particle sensors may be placed in the work environment, near the work area, on one or more welding accessories, within the fume extraction system 100, etc., in order to provide parameters or other information indicative of a work operation being performed. In some examples, one or more sensors may be placed on welding accessories, such as fume nozzle 132 attached to the first collection hose 130 or the second collection hose 140 in order to sense the connection of the fume nozzle 132 and/or movement indicating that the first collection hose 130 and/or second collection hose 140 is being used for welding.

The one or more sensors may communicate with the extraction system to provide information related to the work environment (e.g. if particles are present, if particles of a certain size are present, if a certain amount of particles are present, and/or other indications of welding being performed). The one or more sensors may provide a signal to inform the control circuitry 240 that welding is being performed, and/or may provide measurement data to the control circuitry 240. In some examples, information and/or parameters may be collected from multiple sensors or a combination of sensors (e.g., an accelerometer located on an accessory, one or more particulate sensors in the environment, on a welding accessory, etc.) to determine whether a user is currently welding. For example, the user may utilize a helmet, gloves, or other protective wear, which may include one or more sensors. In some examples, spatial tracking may be used to determine whether a welding operation is being performed. For example, markers may be placed on accessories of the extraction system 100 and a sensing device may be used to sense and/or track the markers during a weld to determine if welding is occurring.

Additionally or alternatively, the extraction system 100 and/or extraction of airborne particles (e.g. by turning on one or more motors of the extraction system 100) may begin when one or more accessories is active (e.g., the welding gun is being used, the wire feeder is on and/or advancing or retracting wire, etc.), as determined by one or more sensors.

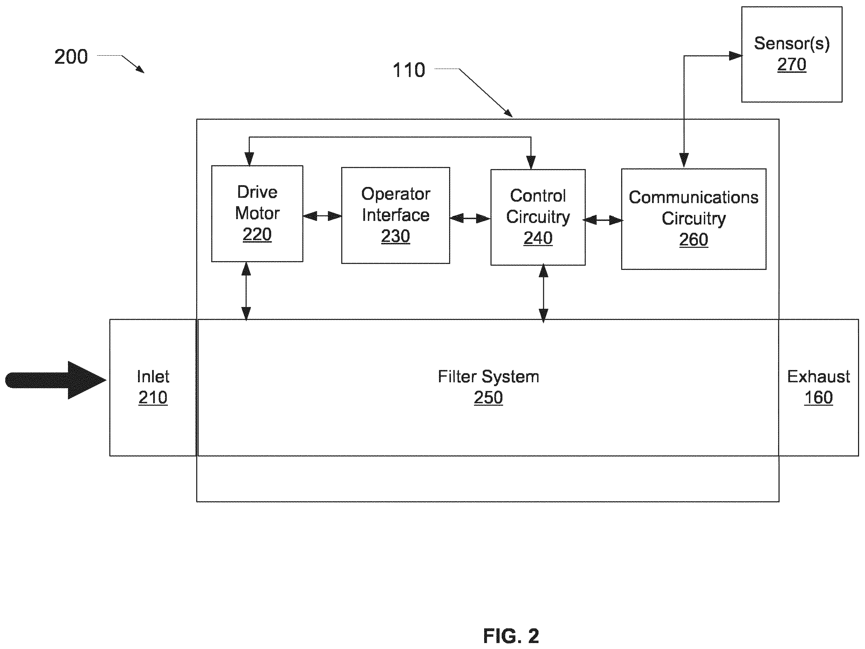

FIG. 2 illustrates a block diagram of the example extraction system 100 of FIG. 1, in accordance with aspects of this disclosure. The extraction system 100 draws the particles in via one or more collection hoses such as those described above with regards to FIG. 1, into the housing 110. The housing 110 includes one or more inlets 210, a drive motor 220, an operator interface 230, control circuitry 240, a filter system 250, a communications system 260, and one or more sensors 270. The extraction system 100 may be designed to draw power from any source, such as the power grid, battery sources, engine-generator sets, and so forth.

The one or more inlets 210 may receive air flow from first connection port 120 and/or second connection port 122 described above with regards to FIG. 1. In some examples, the housing 110 includes one connection port, such as connection port 120 or connection port 122 which corresponds to the inlet 210. In some other examples, two or more connection ports may connect into one inlet 210. In yet other examples, multiple inlets may lead the air flow from multiple connection ports to the filter system 250. The drive motor 230 is controlled by control circuitry 240 which may provide drive signals to the drive motor 230 for fixed-speed or variable-speed operation. Although one drive motor 220 is depicted in FIG. 2, multiple drive motors, blowers, fans, and/or compressors may be utilized to produce suction for air flow from the inlet 210 through the filter system 250, and through the exhaust 160.

The control circuitry 240 typically includes a processor and memory (not shown) for carrying out drive operations as desired by the operator or in response to system inputs via the operator interface 230. The control circuitry 240 may be coupled to the drive motor 220 (e.g., via small adjustment motors and actuator assemblies), operator interface 230, and filter system 250. Accordingly, the control circuitry 240 may communicate with the operator interface 230 for receiving operator settings, speed settings, air flow settings, on-off commands, and so forth. It should also be noted that adjustments to flow rates for the negative pressure airstream may be made by altering the speed of the drive motor(s) 220, one or more additional motors, blowers, fans, or compressors. In some examples, the operator interface 230 may be a remote interface and/or may communicate with a remote interface that emulates the operator interface 230.

The communications circuitry 260 may include wired and/or wireless communication capabilities to receive signals from remote inputs, remote systems, and so forth. For example, the communications circuitry 260 may include cabling, one or more antennae, network interface, etc., to exchange data with other system components, such as a welding/plasma cutting or other components of a welding system (e.g., welding or plasma cutting power supplies, wire feeders, shielding gas supplies, and so forth). In other metalworking settings, the system may include various other manual and machine tools. In still other settings, the system may include various robots, production lines, power tools (e.g., saws, workstations, etc.). These will typically be coupled to the operation to accomplish the desired task on a workpiece. Certain of these systems may be capable of providing control signals to the extraction system 100 to allow for turning the extraction system 100 on and off, regulating speed of the drive motors, selecting a particular type of filter of the filter system 250 (as described in further detail below), regulating air flow through the filter system, and so forth. Although separate adjustment mechanisms are described, a single adjustment could be provided that allows for simply adjusting the ratio of the flow rates, or selecting a path to direct the air flow, such as via a single knob or input switch at the housing 110, at a nozzle coupled to one of the collection hoses 130, or at any convenient location. In some examples, a profile may be set that allows air flow settings to be customized so that a user may select the profile using a button, knob, etc. The profile may include, for example, flow rates, a filter type, paths to direct the air flow, etc.). In some examples, multiple profiles may be set, which an operator may select depending on the application for which the fume extractor may be used (e.g. welding, cutting, sanding, etc.).

The inlet 210 may receive the air flow and direct the air flow into the filter system 250. The filter system 250 may be configured to filter the air drawn into the housing 110 before expelling the air through the exhaust 160. The housing 110 draws air into the inlet 210 and through a filter system which will be described in further detail with regards to FIGs. 2-4 below.

The control circuitry 240 may communicate with one or more sensors 270. The one or more sensors 270 may be located in or around the extraction system 100. For example, the sensors 270 may be located on one or more welding accessories in the work area, in the environment surrounding the work area, on/in the extraction system 100, near the extraction system 100 or work area, on accessories of the extraction system 100 (e.g., first collection hose 130, second collection hose 140, fume nozzle 132, fume gun 140, welding helmets, welding gloves, etc.), at one or more connection points 142, at one or more connection ports (e.g. connection ports 120 122), etc. The sensor(s) 270 may be configured to communicate with the control circuitry 240 of the extraction system 100 via the communications circuitry 260.

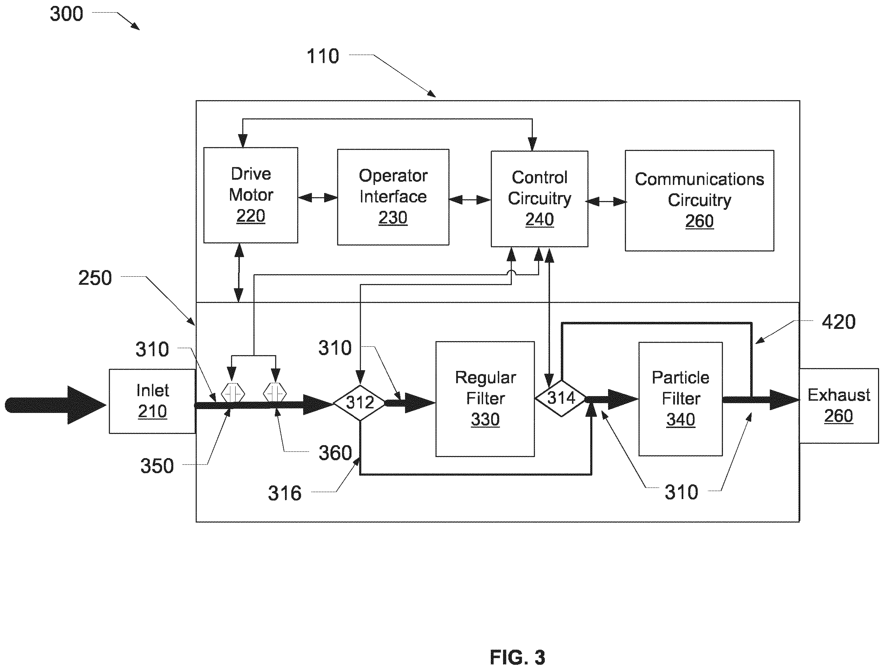

FIG. 3 illustrates a first exemplary filter system that may be used to implement the example exhaust fume system of FIG. 1, in accordance with aspects of this disclosure. Air may be drawn into the bypass filter system 300 via the inlet 210. The inlet 210 intakes air which is then passed through a primary path 310 which leads from the inlet 210 to a first valve 312, a regular filter 330, a second valve 314, a particle filter 340, and out to the exhaust 260. In some examples, the first valve 312 may direct air to a first filter type or a second filter type. The first filter type may be a regular filter 330 and the second filter type may be a particle filter 340. The particle filter 340 may be a filter with a Minimum Efficiency Reporting Value (MERV) rating of 12 or higher, and the regular filter 330 may be a filter with a MERV rating that is less than 12. The particle filter 340 may be a filter that is used to filter particles from fumes, smoke, etc. resulting from welding/cutting. The regular filter 330 may be a filter, for example, that is used when vacuuming dust or larger particles, or when vacuuming debris from an area.

The first valve 312 and second valve 314 may be diverter valves, y-valves, bypass valves, control valves, or any other similar valves. In some examples, the first valve 312 and the second valve 314 are the same type of valve. In some other examples, the first valve 312 and the second valve 314 are different types of valves. The first valve 312 is configured to allow the air flow to be routed from the inlet 210 through the primary path 310 to the regular filter 330 or to bypass the regular filter 330 via a first bypass path 316. The second valve 314 is configured to allow air to be routed from the regular filter 330 to the particle filter 340 or to bypass the particle filter 340 via the second bypass path 320.

The control circuitry 240 is configured to control the first valve 312 and the second valve 314. Additionally or alternatively, the first valve 312 and the second valve 314 may be manually controlled by a user via the operator interface 230 or via another input, such as a remote interface communicating with the control circuitry 240, a switch located on the extraction system 100, a switch on a nozzle, etc. In some examples, the sensor(s) 270 may sense fumes or that welding is being performed via a light sensor, a particulate sensor, a proximity sensor, a thermal sensor, accelerometer, laser sensor, etc. and may send a signal to the control circuitry to adjust the first valve 312 and the second valve 314. Based on the signal, the control circuitry 240 may direct the first valve 312 and/or the second valve 314 to bypass the regular filter 330 and/or the particle filter 340.

In some examples, the one or more sensors may be one or more particle sensors, such as a first particle sensor 350 and a second particle sensor 360. The first particle sensor 350 and second particle sensor 360 may perform measurements. For example, the measurements may be measurements to measure particle concentrations and/or particle sizes within the environment. The particle sensor(s) may provide measurement information to the control circuitry 250 which will cause the control circuitry 250 to direct the first valve or the second valve to route air accordingly. In some examples, measurements may be taken from one or both of the first particle sensor 350 and the second particle sensor 360 and the measurements may be sent to the control circuitry 240.

In some other examples, the first particle sensor 350 and/or the second particle sensor 360 may perform measurements and determine particle size and/or amount of particles present and may provide a signal and/or measurement information to the control circuitry 250, the first valve 312, and/or the second valve 314 indicating the route the air flow show take through the filter system 250. For example, the first particle sensor 350 and/or the second particle sensor 360 may perform measurements and categorize the air flow as having particles of a certain type (based on a MERV-rating scale, for example, although other scales may be used to classify the air flow, such as air quality index, or other similar scale). The first particle sensor 350 and/or the second particle sensor 360 may send measurement and/or classification information to the control circuitry 250 to route the air flow to regular filter 330 and/or the particle filter 340 based on the information provided. In some examples, the air flow may be routed directly through the main path 310 through the regular filter 330, the particle filter 340, and to the exhaust. In some other examples, the air flow may be routed by the first valve 312 to the regular filter 330 and by the second valve 314 to the particle filter 340 or to the exhaust 260. In yet other examples, the air flow may be routed by the first valve 312 to the particle filter 340 and subsequently to the exhaust 260.

In some examples, the control circuitry 240 may turn on the fume extraction system 100 and/or the drive motor 220 after receiving measurements from the first particle sensor 350 and/or the second particle sensor 360. Additionally or alternatively, the drive motor 220 may be adjusted based on measurements from one or both of the first particle sensor 350 and/or the second particle sensor 260. In some examples, once one or both measurements from the first particle sensor 350 and/or the second particle sensor reach certain threshold(s), the control circuitry 240 may determine that a particular filter type should be used and may direct the valve 410 to route the air flow to the particle filter 340. In some other examples, once the particulate measurements fall below a certain threshold, the control circuitry 240 may determine that the valve 410 should route the air flow to the regular filter 330. Measurements from the first particle sensor 350 and/or the second particle sensor 360 may be taken periodically or continuously. In some examples, the measurements may be taken based on intervals input by a user through the operator interface 230.

Additionally or alternatively, the control circuitry 240 may adjust the drive motor 220 based on the measurements from the first particle sensor 350 and/or the second particle sensor 360. For example, the control circuitry 240 may determine that the air flow should be directed to the particle filter 340 and that the air flow settings for the particle filter 340 should be a certain flow rate. The control circuitry 240 may adjust the drive motor accordingly in order to increase and/or decrease the suction of the air through the particle filter 340 in order to obtain the predetermined flow rate. In some examples, the control circuitry 240 may adjust the drive motor 220 to obtain a predetermined flow rate for the regular filter 330. The flow rate may be automatically adjusted by the control circuitry 240 as the filter collects particles and the filter becomes congested so that air flow remains at the predetermined flow rate. The predetermined flow rate for the air flow settings may be the same or different for each of the particular filter 340 and the regular filter 450. In some examples, the air flow settings may be adjusted based on whether the valve 410 is directing the air flow to the main path 310, the first bypass path 316 or the second bypass path 320. The air flow settings may be input by a user through the operator interface 230, may be determined automatically by the control circuitry 240, and/or may be set to default settings, as non-limiting examples. Once the air flow is directed through the particle filter 340 or the regular filter 330, the air flow is directed externally through the exhaust 260.

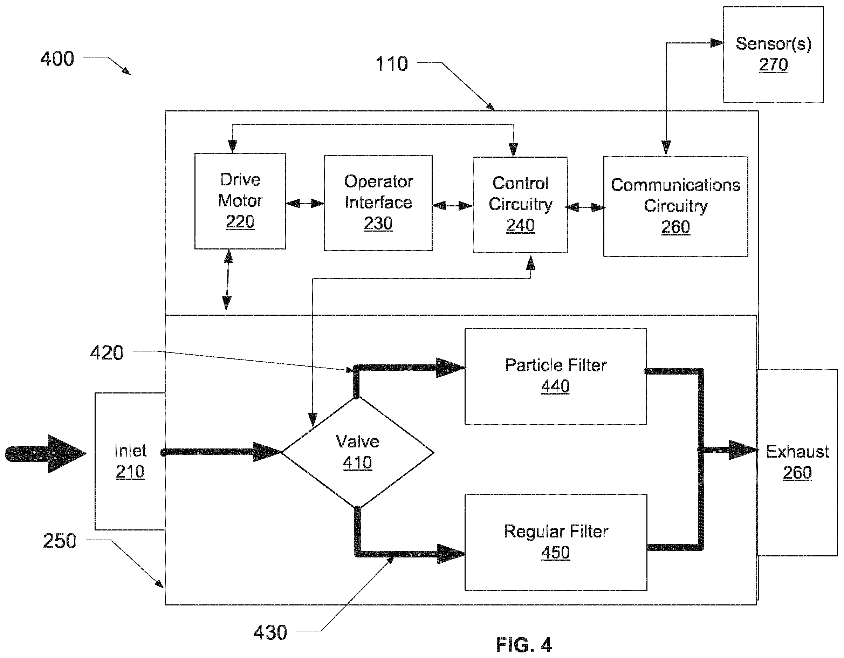

FIG. 4 illustrates a second exemplary filter system that may be used to implement the example exhaust fume system of FIG. 1, in accordance with aspects of this disclosure. Air may be drawn into the dual path filter system 400 via the inlet 210. The inlet 210 intakes air which is then passed through a valve 410 to a first path 420 or a second path 430. In some examples, the first path 420 is a path leading to a first type of filter and the second path 430 is a path leading to a second type of filter. The first filter type may be a particle filter 440 and the second filter type may be a regular filter 450. The particle filter 440 may be a filter with a Minimum Efficiency Reporting Value (MERV) rating of 12 or higher, and the regular filter 450 may be a filter with a MERV rating that is less than 12. The particle filter 440 may be a filter that is used to filter particles from fumes, smoke, etc. resulting from welding/cutting. The regular filter 450 may be a filter, for example, that is used when vacuuming dust or larger particles, or when vacuuming debris from an area.

The valve 410 may be a diverter valve, a y-valve, or any other similar valve that allows air to be diverted from the inlet 210 through the first path 420 or the second path 430 and may be controlled by the control circuitry 240. Additionally or alternatively, the valve 410 may be manually controlled by a user via the operator interface 230 or via another input, such as a remote interface communicating with the control circuitry 240, a switch located on the extraction system 100, a switch on a nozzle, etc. In some examples, the sensor(s) 270 may sense fumes or that welding is being performed via a light sensor, a particulate sensor, a proximity sensor, a thermal sensor, accelerometer, etc. and may send a signal to the control circuitry to adjust the valve 410. Based on the signal, the control circuitry 240 may direct the valve 410 to route the air to the first path 420 or the second path 430.

In some examples, the one or more sensors 270 may perform measurements. For example, measurements may be taken from a variety of sources and/or accessories, such as a helmet, a nozzle, a welding gun, or from the nearby environment and sent to the control circuitry 240 which may determine that welding is being performed. In some examples, the control circuitry 240 may turn on the fume extraction system 100 and/or the drive motor 220 once the determination is made that welding is being performed. In some other examples, once one or measurements reach certain threshold(s), the control circuitry 240 may determine that a particular filter type should be used and may direct the valve 410 to route the air flow to the particle filter. In some other examples, once the particulate measurements fall below a certain threshold, the control circuitry 240 may determine that the valve 410 should route the air flow to the regular filter 450. In some examples, the measurements may be taken may be taken periodically or continuously. In some examples, the measurements may be taken based on intervals input by a user through the operator interface 230.

Additionally or alternatively, the control circuitry 240 may adjust the drive motor 220 based on the measurements from the sensor(s) 270. For example, the control circuitry 240 may determine that the air flow should be directed to the particle filter 440. In some examples, the particle filter 440 may require a certain amount of suction in order for the air to properly flow through the filter at a predetermined flow rate (e.g. cubic feet per meter (cfm)), and so the drive motor may be adjusted to increase and/or decrease the suction of the air through the particle filter 440 in order to obtain and/or maintain the predetermined flow rate. In some examples, the regular filter may be able to filter particles with lower suction so the control circuitry may adjust the drive motor 220 accordingly. In some other examples, the flow rate may be automatically adjusted by the control circuitry 240 as the filter collects particles and the filter becomes congested so that air flow rate remains at a predetermined level. The predetermined level for the air flow settings may be the same or different for each of the particular filter 440 and the regular filter 450. In some examples, the air flow settings may be adjusted based on whether the valve 410 is directing the air flow to the first path 420 or the second path 430. The air flow settings may be input by a user through the operator interface 230 or may be determined automatically by the control circuitry 240 using measurements/signals from one or more sensors. Once the air flow is directed through the particle filter 440 or the regular filter 450, the air flow is directed externally through the exhaust 260.

In some examples, the first path 420 or second path 430 may be selected by the control circuitry 240 based on whether a user is actively using the collection hose 130 and/or collection hose 140. For example, a welding gun 140 such as the welding gun described in FIG. 1, may be connected via the connection point 142, and when a user is actively welding, one or more sensors at the welding gun 140 may send a signal to the control circuitry 240 via the communications circuitry 260 indicating that the welding gun 140 is connected at the connection point 142, and/or that the welding gun 142 is moving. In some examples, the sensors may be one or more of a light sensor, a particulate sensor, a proximity sensor, a thermal sensor, accelerometer, laser sensor, etc. that provide a signal and/or measurement data to the control circuitry that a user is welding and/or that fumes are being produced, in which case the control circuitry 240 may send a signal to the valve 410 to direct captured particles to the particle filter 440. In some examples, when the welding gun 142 is not connected at the connection point 142, the control circuitry 240 may send a signal to the valve 410 to direct captured air to the regular filter 450. In some cases, sensing a welding gun 142 connected may cause the control circuitry 240 to send one or more signals to the drive motor 220 to turn on the drive motor 220 and/or adjust the speed of the drive motor 220 in order to increase and/or decrease air flow cfm through the filter system 250.

Additionally or alternatively, if the first collection hose 130 or the second collection hose 140 is connected to the first connection port 120 or the second connection port 122, the control circuitry 240 may switch the fume extractor system 110 on or off. In some examples, the first connection port 120 and/or the second connection port 122 may be designated as a particle filter port or a regular filter port, and when a collection hose is connected into the designated particle filter port, such as the first connection port 120, a signal may be sent to the control circuitry 240 so that the control circuitry 240 may command the valve 410 to direct air to the particle filter 440 or the regular filter 450. In some examples, the designation of the first connection port 120 or the second connection port 122 as being a particular filter port or regular filter port may be input via the operator interface 230 by a user.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding extraction machine comprising:
   one or more inlets to receive an air flow and direct the air flow to a main path;
   a first valve configured to direct the air flow through the main path or through a first diversion, wherein the main path includes a first filter type and a second filter type, wherein the first diversion bypasses the first filter type;
   a second valve configured to direct the air flow through the main path or through a second diversion, wherein the second diversion bypasses the main path including the second filter type; and
   an exhaust for outputting the air flow.
Clause 2. The welding extraction machine of clause 1, further comprising control circuitry configured to control the first valve and the second valve.
Clause 3. The welding extraction machine of clause 2, further comprising one or more sensors to provide one or more signals to the control circuitry, the control circuitry configured to control the first valve to direct the air flow to the main path or the first diversion based on the one or more signals.
Clause 4. The welding extraction machine of clause 3, further comprising one or more sensors to provide a signal to the control circuitry, the control circuitry configured to control the second valve to direct the air flow to the main path or the second diversion based on the one or more signals.
Clause 5. The welding extraction machine of clause 1, wherein the first filter type is a filter with a minimum efficiency reporting value (MERV) that is 12 or greater.
Clause 6. The welding extraction machine of clause 1, wherein the second filter type is a filter with a MERV that is less than 12.
Clause 7. A welding fume extraction machine comprising:
   one or more inlets to receive air flow;
   a valve for directing the air flow received through the one or more inlets to a first path or a second path, wherein the valve is configured to direct the air flow to at least the first path or the second path, wherein the first path includes a first filter type and the second path includes a second filter type; and
   an exhaust for outputting the air flow from the first path or the second path.
Clause 8. The welding fume extraction machine of clause 7, further comprising control circuitry configured to control the valve.
Clause 9. The welding fume extraction machine of clause 8, further comprising one or more sensors to provide a signal to the control circuitry, the control circuitry configured to direct the valve to route the air flow to the first path or the second path based on the signal.
Clause 10. The welding fume extraction machine of clause 9, wherein the one or more sensors are one or more of an accelerometer, a motion sensor, an inertial measurement unit, a light sensor, a particulate sensor, or a proximity sensor.
Clause 11. The welding fume extraction machine of clause 9, further comprising a connection point for a welding accessory, wherein the control circuitry controls the valve to direct the air flow based on whether the welding accessory is connected at the connection point.
Clause 12. The welding fume extraction machine of clause 11, wherein the control circuitry is configured to control the valve to direct the air flow to the second filter type when the welding accessory is disconnected at the connection point.
Clause 13. The welding fume extraction machine of clause 12, wherein the control circuitry is configured to control the valve to direct the air flow to the first filter type when the welding accessory is connected at the connection point.
Clause 14. The welding fume extraction machine of clause 9, further comprising a welding accessory, wherein the one or more sensors are located on the welding accessory.
Clause 15. The welding fume extraction machine of clause 8, further comprising a welding accessory, and wherein the control circuitry is configured to control the valve to direct the air flow to the first filter type when the welding accessory is in use by an operator.
Clause 16. The welding fume extraction machine of clause 15, wherein the welding accessory is a fume extraction nozzle or a fume gun.
Clause 17. The welding fume extraction machine of clause 7, wherein the first filter type is a filter with a minimum efficiency reporting value (MERV) that is 12 or greater.
Clause 18. The welding fume extraction machine of clause 8, wherein the second filter type is a filter with a MERV that is less than 12.
Clause 19. The welding fume extraction machine of clause 7, further comprising a user interface configured to provide weld fume settings for the valve.
Clause 20. The welding fume extraction machine of clause 7, further comprising a particulate bin to receive particles extracted from the air flow.

## Claims

1. A welding extraction machine comprising:
one or more inlets to receive an air flow and direct the air flow to a main path;
a first valve configured to direct the air flow through the main path or through a first diversion, wherein the main path includes a first filter type and a second filter type, wherein the first diversion bypasses the first filter type;
a second valve configured to direct the air flow through the main path or through a second diversion, wherein the second diversion bypasses the main path including the second filter type; and
an exhaust for outputting the air flow.

2. The welding extraction machine of claim 1, further comprising control circuitry configured to control the first valve and the second valve.

3. The welding extraction machine of claim 2, further comprising one or more sensors to provide one or more signals to the control circuitry, the control circuitry configured to control the first valve to direct the air flow to the main path or the first diversion based on the one or more signals, and optionally further comprising one or more sensors to provide a signal to the control circuitry, the control circuitry configured to control the second valve to direct the air flow to the main path or the second diversion based on the one or more signals.

4. The welding extraction machine of claim 1, wherein the first filter type is a filter with a minimum efficiency reporting value (MERV) that is 12 or greater or
wherein the second filter type is a filter with a MERV that is less than 12.

5. A welding fume extraction machine comprising:
one or more inlets to receive air flow;
a valve for directing the air flow received through the one or more inlets to a first path or a second path, wherein the valve is configured to direct the air flow to at least the first path or the second path, wherein the first path includes a first filter type and the second path includes a second filter type; and
an exhaust for outputting the air flow from the first path or the second path.

6. The welding fume extraction machine of claim 5, further comprising control circuitry configured to control the valve.

7. The welding fume extraction machine of claim 6, further comprising one or more sensors to provide a signal to the control circuitry, the control circuitry configured to direct the valve to route the air flow to the first path or the second path based on the signal, and optionally wherein the one or more sensors are one or more of an accelerometer, a motion sensor, an inertial measurement unit, a light sensor, a particulate sensor, or a proximity sensor.

8. The welding fume extraction machine of claim 7, further comprising a connection point for a welding accessory, wherein the control circuitry controls the valve to direct the air flow based on whether the welding accessory is connected at the connection point.

9. The welding fume extraction machine of claim 8, wherein the control circuitry is configured to control the valve to direct the air flow to the second filter type when the welding accessory is disconnected at the connection point.

10. The welding fume extraction machine of claim 9, wherein the control circuitry is configured to control the valve to direct the air flow to the first filter type when the welding accessory is connected at the connection point.

11. The welding fume extraction machine of claim 7, further comprising a welding accessory, wherein the one or more sensors are located on the welding accessory.

12. The welding fume extraction machine of claim 6, further comprising a welding accessory, and wherein the control circuitry is configured to control the valve to direct the air flow to the first filter type when the welding accessory is in use by an operator and optionally wherein the welding accessory is a fume extraction nozzle or a fume gun.

13. The welding fume extraction machine of claim 5, wherein the first filter type is a filter with a minimum efficiency reporting value (MERV) that is 12 or greater.

14. The welding fume extraction machine of claim 6, wherein the second filter type is a filter with a MERV that is less than 12.

15. The welding fume extraction machine of claim 5, further comprising a user interface configured to provide weld fume settings for the valve or wherein the welding fume extraction machine further comprising a particulate bin to receive particles extracted from the air flow.
